# EUROPEAN PATENT APPLICATION

(11) **EP 0 798 933 A2**
(43) Date of publication of application: **01.10.1997**
(21) Application number: 97301972.2
(22) Date of filing: 24.03.1997
(51) Int. Cl.: H04N 7/50, H04N 7/36

(54) **Motion vector decoding circuit**

(30) Priority: 26.03.1996 KR 9608373
(71) Applicant: SAMSUNG ELECTRO-MECHANICS Co. Ltd., Suwon, Kyunggi-do (KR)
(72) Inventor: Kim, Je-ik, Sungbuk-gu Seoul (KR)
(74) Representative: Chugg, David John

(57) **Abstract**

A motion vector high-speed decoding circuit is provided, which can decode a motion vector of the MPEG-2 standard at high speed. The motion vector high-speed decoding circuit realizes a motion vector decoding method using an exclusive-use hardware of a pipeline method, which includes a parameter store (10) for storing the input motion vector decoding parameter, that is, a motion vector range determination code, a motion vector code, and a motion vector residual code, a motion vector decoder (20) for storing a motion vector to be decoded as a previous motion vector and decoding the motion vector using the parameter stored in the parameter store (10) and the previous motion vector, a dual primer (50) for receiving the previous motion vector stored in the motion vector decoder (20) and generating a number of dual motion vectors, and a motion vector controller (30) for controlling the operations of all the elements via the input parameters and selecting one between the previous motion vector and the dual motion vector, to output the selected result as a finally decoded motion vector. Six-clock periods are needed to decode one motion vector, and 6+(n-1)-clock periods are needed to decode n motion vectors via a pipeline processing, which enables the high-speed decoding circuit to be applied to a high-speed system such as a high-definition television.

## Description

The present invention relates to a motion vector decoding circuit, and more particularly, to a motion vector decoding circuit which can be applied to a high-speed system such as a high-definition television (HDTV).

A general image signal processing apparatus using a continuous digital image signal such as a HDTV, a digital VTR and a multi-media system uses various encoding methods in order to compress transmission data more effectively. A differential pulse coded modulation (DPCM) which is one of the various encoding methods encodes a digital image signal by using a data correlation remaining between adjacent frames of images.

When a difference signal between temporally adjacent frames is encoded using a DPCM method, a greater amount of data is generated in a region having a degree of movement between frames than in a region lacking movement there between. However, the amount of data can be reduced by finding out the most similar segment at an adjacent frame to an image of a particular segment of a current frame and encoding the image difference between two segments. Such a method is called a motion compensated DPCM method. The motion compensated DPCM method encodes difference data between each segment of the current frame and the corresponding image segment of the adjacent frame, to thereby improve a transmission efficiency. A motion vector used for the motion compensated DPCM method represents a direction and magnitude of movement between the image segments of the adjacent frame and the current frame in which the difference signal of between the image segments of the current frame and the adjacent frame are smallest. The motion vector is encoded prior to being transmitted. An example of encoding the motion vector will be described as follows.

When the motion vectors are 3, 10, 30, 30, -14, -16, 27 and 24, a difference between the two motion vectors which is referred to as delta, becomes 3, 7, 20, 0, -44,-2, 43 and -3, respectively. When a motion vector is represented as 6 bits and the range of the motion vector is between -32 and 31, 48 bits are needed to represent 8 motion vectors. Thus, concerning difference data -44 and 43 exceeding the motion vector range between -32 and 31, the data -44 smaller than the minimum value -32 of the motion vector range is added to the value 64 of the motion vector range. That is, -44+64=20. The value 64 of the motion vector range is subtracted from the data 43 larger than the maximum value 31 of the motion vector range. That is, 43-64=-21. A plurality of difference data which have been obtained is divided into a predetermined number of groups, and a residual code is allocated to each difference data in order to discriminate between various difference data belonging to the same group. Here, since the difference data of "0" has the highest probability, the residual code is not assigned thereto. To decode the encoded and transmitted motion vector, a conventional motion vector decoding is performed by a software conceptual method in a reduced instruction-set computer (RISC) or a microcontroller.

An image decoding system adapted in the HDTV standard proposed by the MPEG-2 requires a larger size of image and a higher speed processing. Thus, the conventional software conceptual method burdens a processor. Thus, a hardware apparatus is needed to reduce the burden of a processor and exclusively perform a motion vector decoding.

With a view to solving or reducing the above problem, it is an aim of embodiments of the present invention to provide a motion vector high-speed decoding circuit for decoding motion vectors at high speed by using an exclusive-use hardware capable of parallel processing for use in a HDTV high-speed system of MPEG-2 standards, in which parameters necessary for motion vector decoding are sequentially delayed and output via a pipeline having delays.

According to a first aspect of the invention there is provided a motion vector high-speed decoding circuit comprising: an input port for receiving parameters necessary for motion vector decoding; a parameter store for storing the input parameters; motion vector decoding means for storing motion vectors to be decoded as a previous motion vector and decoding the motion vector using the parameters stored in said parameter store and the previous motion vector; a dual primer for receiving the previous motion vector stored in said motion vector decoding means and generating a number of dual motion vectors; and a motion vector controller for controlling the operations of all the elements via the input parameters and selecting one between said previous motion vector and said dual motion vector, to output the selected result as a finally decoded motion vector.

Preferably, the parameters stored in said parameter store are a motion vector range determination code, a motion vector code and a motion vector residual code in which said motion vector range determination code determines a motion vector range, and said motion vector code and said motion vector residual code are allocated to respective difference data in order to discriminate a variety of differential data belonging to the same group as the code corresponding to each group when difference data between a plurality of motion vectors is divided into a predetermined number of groups.

Preferably, said motion vector decoding means comprises: pipeline means for reading the motion vector code from said parameter store and sequentially delaying the read motion vector code to output the delayed result; delta calculation means for reading the motion vector code, the motion vector residual code and the motion vector range determination code and calculating a delta value being a difference motion vector; a delta determiner for selecting one of the delta values calculated in said delta calculation means and the motion vector code output from said pipeline means and determining the selected result as a final delta value; a motion vector determiner for outputting the stored previous motion vector as it is or dividing the stored previous motion vector by "2" and adding the determined delta value and a sign bit of the motion vector code output from said pipeline means to the result, to then determine a current motion vector; and a range controller for comparing the current motion vector determined in said motion vector determiner with the motion vector range by the said motion vector range determination code, controls the motion vector range based on the comparison result, and outputs the range controlled motion vector as it is or multiplies the same by "2" under the control of said motion vector controller.

Said pipeline means is preferably composed of a plurality of delays, in which respective delays have delay time as long as one clock pulse.

Said delta calculation means may comprise: an absolute value calculator for obtaining an absolute value of the motion vector code read from said parameter store and subtracting "1" from the absolute value to output the subtracted result; a first delta calculator for reading the motion vector range determination code and the motion vector residual code from said parameter store, subtracting "1" from the motion vector range determination code to left-shift by one bit, multiplying the left-shifted result by the output of said absolute value calculator, and masking a bit portion except for an effective portion of the motion vector residual code; and a second delta calculator for adding the outputs of said first delta calculator and adding a carry input of "1" to the added result, to thereby calculate a delta value.

Each operation of said absolute value calculator, said first delta calculator, said second delta calculator, said delta determiner, said motion vector determiner and said range controller is preferably performed in one clock pulse.

Said motion vector decoding means may require six clock periods to decode one motion vector and 6+(n-1) clock periods to decode n motion vectors.

Said first delta calculator preferably subtracts "1" from said motion vector range determination code to obtain the number of effective bits of said motion vector residual code and masks the remainder bit portion of said motion vector residual code as "0" except for a portion corresponding to the effective bit number.

Preferably, said first delta calculator receives the motion vector code output from a first delay of said pipeline and the motion vector range determination code output from said parameter store, performs a logical operation of a condition when the motion vector code is "0" or the motion vector range determination code is "1" and outputs the logical operation result as a select signal for determining a delta value of said delta determiner.

A delay for delaying the select signal output from said first delta calculator for one clock pulse during which said second delta calculator calculates the delta value may be provided between said first delta calculator and said delta determiner.

Said delta determiner preferably receives the calculated delta value output from said second delta calculator and the motion vector code output from a third delay of said pipeline, and determines said motion vector code as a final delta value if the select signal meeting the condition of said logic operation is input via said delay while determining said calculated delta value as a final delta value if the select signal does not meet the condition of the logic operation.

Said delta determiner may invert individual bits constituting the finally determined delta value in order to reverse a sign bit of the finally determined delta value if said motion vector is smaller than "0" when said calculated delta value is determined as a final delta value.

The last delay in said pipeline preferably applies the sign of the motion vector as a carry input of said motion vector determiner.

Said motion vector determiner preferably comprises: a divider for outputting the stored previous motion vector as it is or dividing the same by "2" to output the divided result under the control of said motion vector controller; an adder for receiving the previous motion vector output from said divider and the delta value determined in said delta determiner to add the same, and adding the sign of the motion vector code which is a carry input to the added result, to calculate a current motion vector; and a delay for delaying the calculated motion vector and outputting the delayed result.

Said range controller preferably comprises: a range control unit for receiving the current motion vector calculated via said delay, comparing the received motion vector with the motion vector range by the motion vector range determination code read from said parameter store, adding the current motion vector to the motion vector range if the current motion vector is smaller than the minimum value of the motion vector range and subtracting the motion vector range from the current motion vector if the current motion vector is greater than the maximum value of the motion vector range; a multiplier for outputting the range-controlled motion vector or multiplying the range-controlled motion vector by "2" to output the multiplied result under the control of said motion vector controller; and a delay for delaying the output of said multiplier.

Said motion vector controller may control said divider in said motion vector determiner to divide the previous motion vector by "2" when the current motion vector is a vertical component at a field structure of a frame picture from the input parameter, and then control said multiplier in said range controller to multiply the range-controlled current motion vector by "2".

Preferably, said motion vector controller selects the dual motion vector applied from said dual primer when the kind of the motion vector is a predictive-picture (P-picture), and selects the previous motion vector applied from said motion vector decoding means in the other cases, to thereby output a finally decoded motion vector.

For a better understanding of the invention, and to show how embodiments of the same may be carried into effect, reference will now be made, by way of example, to the accompanying diagrammatic drawings, in which:
Figure 1 is a block diagram showing an image decoding system adopting a motion vector high-speed decoding circuit according to an embodiment of the present invention; and
Figure 2 is a detailed block diagram showing the motion vector decoder of Figure 1.

A preferred embodiment of the present invention will be described in detail with reference to the accompanying drawings.

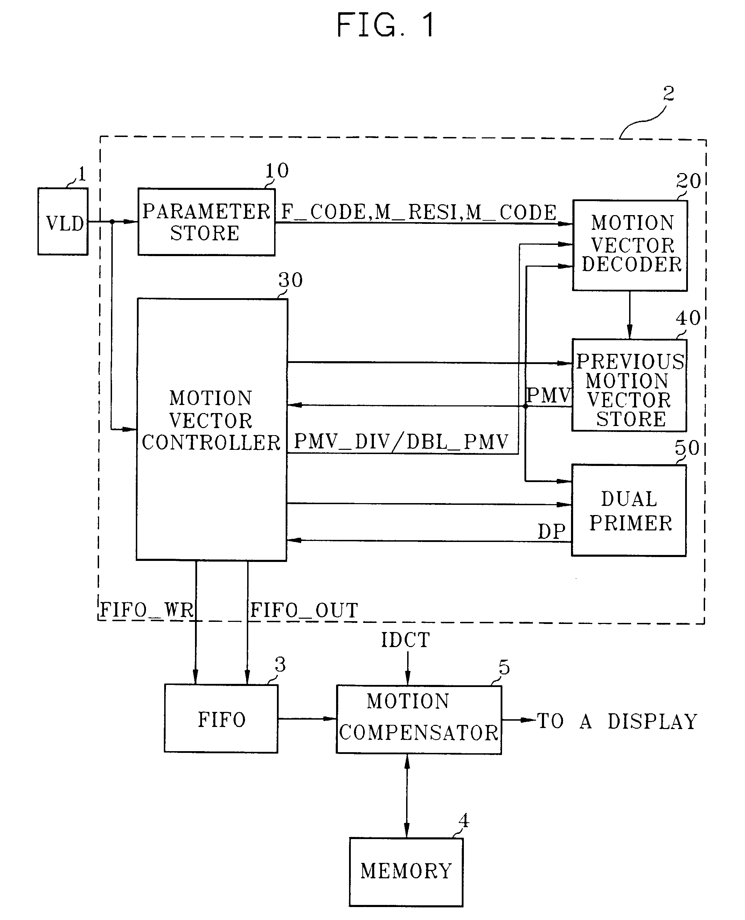

An image decoding system of Figure 1 adopts a motion vector high-speed decoding circuit 2. The motion vector decoding circuit 2 receives parameters necessary for motion vector decoding and performs a motion vector decoding. The image decoding system also includes a variable length decoder 1 for variable-length-decoding the received variable-length-encoded data, a first-in-first-out (FIFO) memory 3 for storing the decoded motion vector output from the motion vector decoding circuit 2, and a memory 4 for storing restored image data of one frame. A motion compensator 5 performs a motion compensation using motion vectors, with respect to the outputs of an inverse-quantizer and inverse-discrete cosine transformer (IDCT) (not shown) and the image data stored in the memory 4. The IDCT outputs the inversely quantized and inversely discrete-cosine transformed data with respect to the variable-length-decoded data.

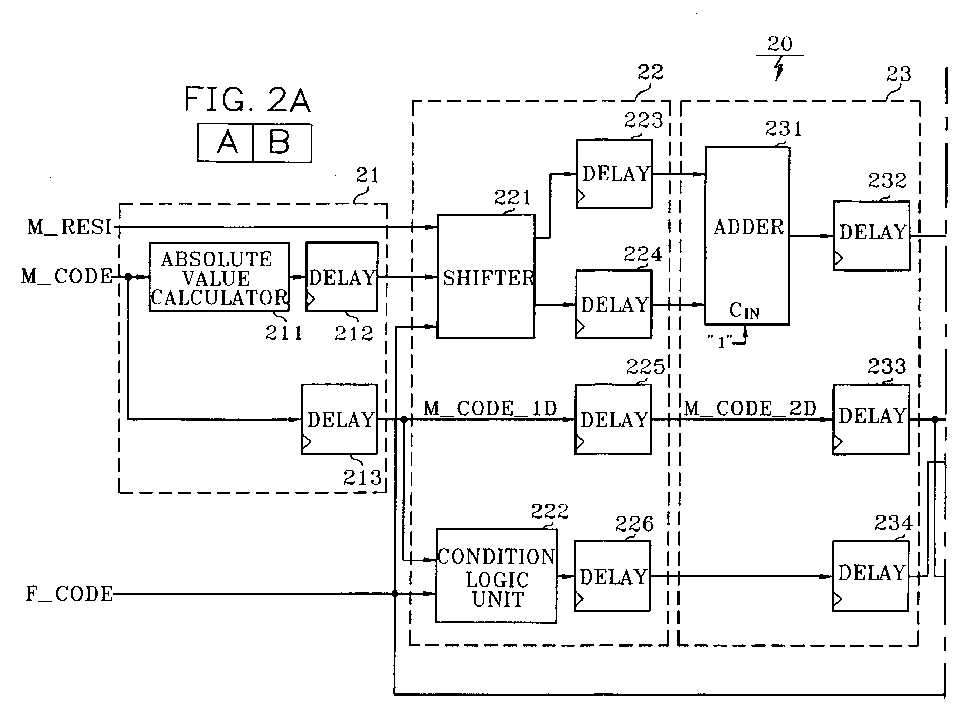

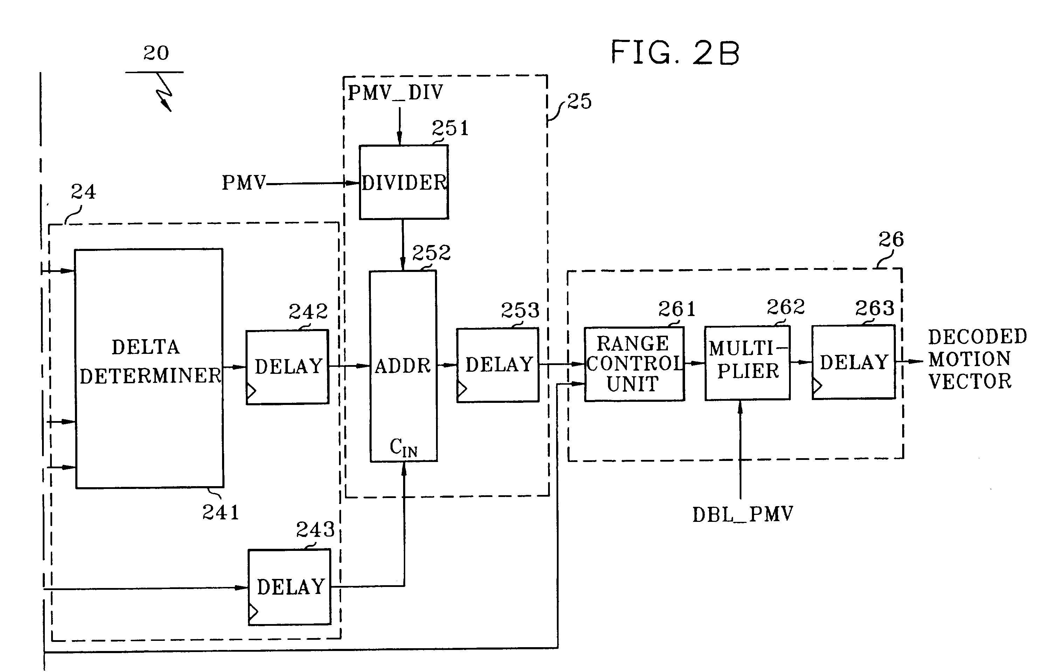

The motion vector decoding circuit 2 includes a parameter store 10 for storing parameters applied from the variable length decoder 1, and a motion vector decoder 20 for receiving the parameters and the previous motion vector and decoding the current motion vector. The detailed construction of the motion vector decoder 20 is shown in Figure 2. The motion vector decoding circuit also includes a previous motion vector store 40 for storing the decoded motion vector as a previous motion vector, a dual primer 50 for receiving the previous motion vector and generating a predetermined number of dual motion vectors, and a motion vector controller 30 for controlling each component of the circuit.

Figure 2 is a detailed block diagram showing the motion vector decoder 20 of Figure 1. The motion vector decoder 20 of Figure 2 embodies a motion vector decoding method by an exclusive-use hardware, in which the motion vector decoding method is described in section 7.6.3.1 of document entitled "ITU-T H.262 ISO/IEC 13818-2 international standard (March 1995, Lausan)."

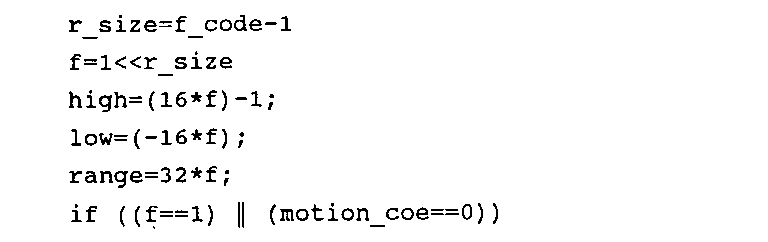

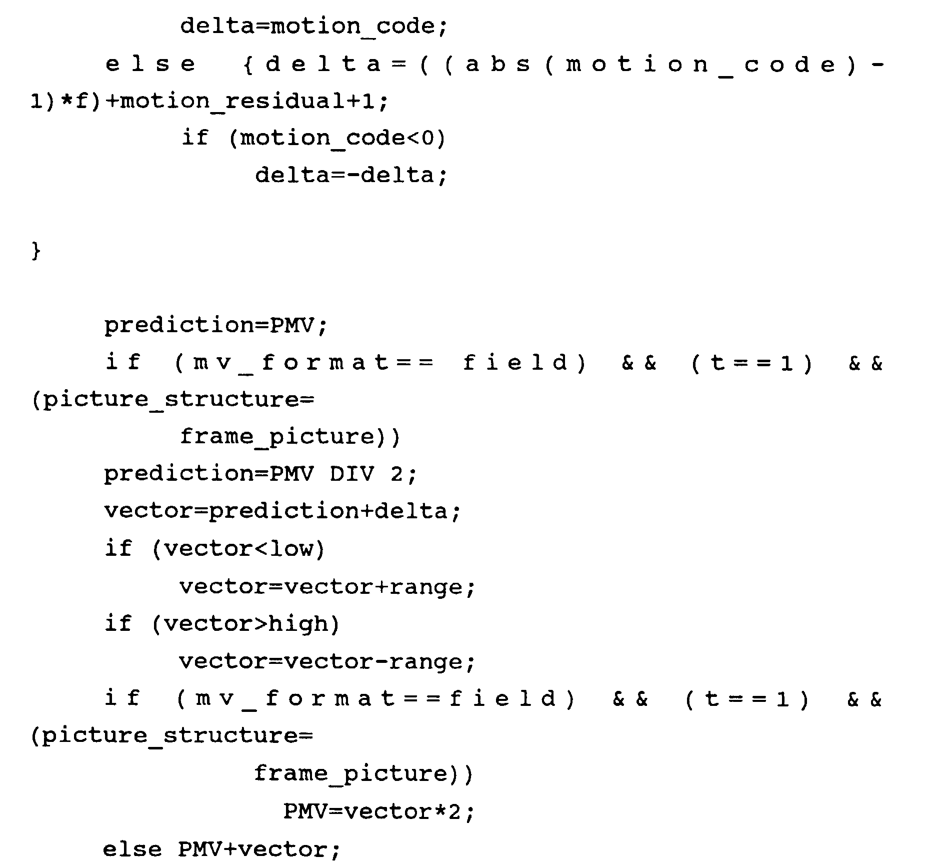

Here, an operator "<<" means a shift left with zero fill, an operation "*" means multiplication, an operator "||" means a logical OR operation, an operator "&&" means logical AND operation, and an operator "==" means an "equal to" symbol.

In Figure 1, the VLD 1 receives the encoded data and variable-length-decodes the received data, to generate variable-length-decoded image data and parity data, that is parameters necessary for motion vector decoding. The image data output from the VLD 1 is supplied to the motion compensator 5 via the inverse quantizer (not shown) and the inverse DCT (not shown). Also, the parameters are applied to the parameter store 10 and the motion vector controller 30 in the motion vector decoding circuit 2. The parameter store 10 stores the applied parameters, that is, code (f_code) for determining a motion vector range, a motion vector code (m_code), a motion vector residual code (m_resi). The motion vector decoder 20 reads the parameters stored in the parameter store 10 under control of the motion vector controller 30 and performs a motion vector decoding operation. The motion vector decoder 20 will be described below referring to Figure 2.

In Figure 2, the motion vector decoder 20 firstly reads a motion vector code (m_code) among the parameters stored in the parameter store 10. Delays 213, 225, 233 and 243 constituting a pipeline structure delay the incoming motion vector code (m_code) by one clock pulse and output the delayed result. During the time when the delay 213 delays the input motion vector code (m_code) by one clock pulse, an absolute value calculator 211 obtains an absolute value of the motion vector (m_code), and subtracts "1" from the obtained absolute value. A delay 212 delays the subtracted result and outputs the result to a first delta calculator 22. At this time, the motion vector code (m_code_1d) delayed by one clock pulse in the delay 213 is also output to the first delta calculator 22.

Then, the motion vector decoder 20 reads the motion vector residual code (m_resi) and the motion vector range determination code (f_code) from the parameter store 10 and applies the read result to the first delta calculator 22. The motion vector range determination code (f_code) is also applied to a range controller 26. During the time when the delay 225 receives the one-clock delayed motion vector code (m_code_1d) and delays the received code by one clock pulse again in the first delta calculator 22, a shifter 221 subtracts "1" from the applied motion vector range determination code (f_code), obtains the number of effective bits of the motion vector residual code (m_resi), left-shifts the obtained result to make it two-times the number (f) of bits, multiplies the obtained number of bits by the absolute value of the motion vector code applied from the delay 212 and then outputs the multiplied result to a delay 224. The delay 224 delays the input data and outputs the delayed result to a second delta calculator 23. The shifter 221 also masks the residual bit portion except for the effective bit portion as "0" in the applied motion vector residual code (m_resi) of a predetermined number of bits and outputs the masked result to a delay 223. The delay 223 delays the input data and outputs the delayed result to the second delta calculator 23. A condition logic unit 222 receives the one-clock delayed motion vector code (m_code_1d) and the motion vector range determination code (f_code) and logically operates. The condition logic unit 222 outputs the motion vector code of "0" or a binary signal having "1" when there is no motion vector residual code or "0" otherwise to the second delta calculator 23 via a delay 226.

An adder 231 in the second delta calculator 23 receives the respective outputs of the delays 223 and 224 and adds the outputs, to calculate a delta value by adding "1" applied to a carry input end Cin to the added result. The calculated delta value is delayed in a delay 232 and output to a delta determination portion 24. The delay 233 delays the motion vector code (m_code_2d) delayed by two clock pulses via the delays 213 and 225, by one clock pulse again, and outputs the delayed result to the delta determination portion 24. The delay 234 receives the binary signal from the delay 226 and delays the received signal by one clock pulse, to output the delayed result to the delta determination portion 24.

In the delta determination portion 24, a delta determiner 241 receives the calculated delta value and the motion vector code (m_code_3d) delayed by three clock pulses via the delays 213, 225 and 233, and selects one of the calculated delta value and the three-clock delayed motion vector code according to the input binary signal input from the delay 234 to determine the selected result as a final delta value. That is, the delta determiner 241 determines the calculated delta value as a final delta value if the binary signal is zero, and three-clock delayed motion vector code as a final delta value if the binary signal is one. When the calculated delta value is determined as a final delta value, the delta determiner 241 reverses a sign of the finally determined delta value if the three-clock delayed motion vector code (m_code_3d) is smaller than zero. To do so, individual bits constituting the finally determined delta value are inverted. Here, a process of adding "1" to the inverted delta value is needed, which is performed by an adder 252 included in the motion vector determination portion 25. The delta value finally determined in the delta determiner 241 is output to the motion vector determination portion 25 via a delay 242. A delay 243 which receives the three-clock delayed motion vector code (m_code_3d) from the delay 233 delays a sign bit which is most significant bit (MSB) of the motion vector code (m_code_3d) by one clock pulse and outputs the delayed result to the motion vector determination portion 25. The motion vector determination portion 25 receives the finally determined delta value via an adder 252 and receives the one-clock delayed sign bit via the carry input end Cin of the adder 252. A divider 251 divides the previous motion vector PMV read from the previous vector store 40 by "2" according to a control signal PMV_DIV applied from the motion vector controller 30 of Figure 1, and is output to the adder 252.

The motion vector controller 30 outputs a control signal PMV_DIV of a value of "0" or "1" to the motion vector decoder 20, according to whether a picture type is a frame structure, and a motion vector is used for a field and vertical component in the motion vector decoded data applied from the VLD 1. Here, the motion vector controller 30 also outputs another control signal DBL_PMV corresponding to the control signal PMV_DIV.

The divider 251 receiving the control signal PMV_DIV outputs the previous motion vector PMV to the adder 252 if the control signal PMV_DIV is "0", and divides the previous motion vector PMV by "2" to output the divided result to the adder 252 if the control signal PMV_DIV is "1". The adder 252 adds the previous motion vector PMV applied from the divider 251 and the finally determined delta value output from the delta determination portion 24, and adds a sign bit of the motion vector code applied via the carry input end Cin to the added result, to obtain a motion vector. The obtained motion vector is output to the range controller 26 via the delay 253. The range controller 26 controls the range so that the motion vector exists within the boundary of the motion vector range determination code (f_code). For this purpose, the range control unit 261 compares the motion vector input from the delay 253 with the motion vector range determined according to the motion vector range determination code (f_code). In the result of comparison, the range control unit 261 adds the motion vector range to the motion vector if the motion vector is smaller than the minimum value of the motion vector range and subtracts the motion vector range from the motion vector if the former is greater than the maximum value of the latter, to thereby control the motion vector. The controlled motion vector is input to a multiplier 262. The multiplier 262 multiplies the controlled motion vector by "2" according to the control signal DBL_PMV when the divider 251 divided the previous motion vector PMV by "2", and outputs the controlled motion vector as a decoded motion vector via the delay 263 when the divider 251 outputted the previous motion vector PMV as it is. The decoded motion vector is stored in the previous motion vector store 40. Here, the operation of each component is accomplished within a one-clock pulse, and a high-speed motion vector decoding is accomplished via a pipeline processing. Thus, a six-clock period of time is needed to decode one motion vector, and only a thirteen-clock period of time is sufficient to decode eight motion vectors via a pipeline processing.

Returning to Figure 1, the motion vector output from the motion vector decoder 20 is stored in the previous motion vector store 40, and is used as a previous motion vector for obtaining a next motion vector. The previous motion vector PMV stored in the previous motion vector store 40 is output to the motion vector decoder 20, the motion vector controller 30 and the dual primer 50 under the control of the motion vector controller 30. The dual primer 50 produces a plurality of dual motion vectors DP using the previous motion vector PMV under the control of the motion vector controller 30 when the currently decoded motion vector is a predictive-picture (P-picture) and outputs the produced motion vectors to the motion vector controller 30. Since a technique for producing a plurality of the dual motion vectors DP in the dual primer 50 is well-known, the detailed description thereof will be omitted. The motion vector controller 30 selects the dual motion vector DP input from the dual primer 50 if the kind of the motion vector is judged as a P-picture via the parameters applied from the VLD 1, and in the other cases, and selects the previous motion vector PMV input from the previous motion vector store 40, to then store the selected result in the FIFO memory 3. The FIFO memory 3 stores the selected motion vector according to a write control FIFO_wr of the motion vector controller 30, and outputs the stored motion vector to the motion compensator 5 in turn. The motion compensator 5 receives the image data designated by the motion vector among the restored image data of one frame stored in the memory 4 and adds the received data and the inverse-discrete-cosine-transformed image data, to then store as well as output the restored image data to the display.

As described above, embodiments of the present invention relate to a motion vector high-speed decoding circuit, and use an exclusive-use hardware via a pipeline comprised of delays to enable to process a motion vector decoding at high speed. As a result, the embodiments can be used in a high-speed system such as a HDTV.

While only certain embodiments of the invention have been specifically described herein, it will be apparent that numerous modifications may be made thereto without departing from the scope of the invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A motion vector high-speed decoding circuit comprising:
an input port for receiving parameters necessary for motion vector decoding;
a parameter (10) store for storing the input parameters;
motion vector decoding means (20) for storing motion vectors to be decoded as a previous motion vector and decoding the motion vectors using the parameters stored in said parameter store (10) and the previous motion vector;
a dual primer (50) for receiving the previous motion vector stored in said motion vector decoding means (20) and generating a number of dual motion vectors; and
a motion vector controller (30) for controlling the operations of all the elements via the input parameters and selecting one between said previous motion vector and said dual motion vector, to output the selected result as a finally decoded motion vector.

2. The motion vector high-speed decoding circuit according to claim 1, wherein the parameters stored in said parameter store (10) are a motion vector range determination code, a motion vector code and a motion vector residual code in which said motion vector range determination code determines a motion vector range, and said motion vector code and said motion vector residual code are allocated to respective difference data in order to discriminate a variety of differential data belonging to the same group as the code corresponding to each group when difference data between a plurality of motion vectors is divided into a predetermined number of groups.

3. The motion vector high-speed decoding circuit according to claim 1 or 2, wherein said motion vector decoding means (20) comprises:
pipeline means (213, 225, 233, 243) for reading the motion vector code from said parameter store (10) and sequentially delaying the read motion vector code to output the delayed result;
delta calculation means (21, 22, 23) for reading the motion vector code, the motion vector residual code and the motion vector range determination code and calculating a delta value being a difference motion vector;
a delta determiner (24) for selecting one of the delta values calculated in said delta calculation means (21, 22, 23) and the motion vector code output from said pipeline means (213, 225, 233, 243) and determining the selected result as a final delta value;
a motion vector determiner (25) for outputting the stored previous motion vector as it is or dividing the stored previous motion vector by "2" and adding the determined delta value and a sign bit of the motion vector code output from said pipeline means (213, 225, 233, 243) to the result, to then determine a current motion vector; and
a range controller (26) for comparing the current motion vector determined in said motion vector determiner (25) with the motion vector range by the said motion vector range determination code, controls the motion vector range based on the comparison result, and outputs the range controlled motion vector as it is or multiplies the same by "2" under the control of said motion vector controller (30).

4. The motion vector high-speed decoding circuit according to claim 3, wherein said pipeline means (213, 225, 233, 243) is composed of a plurality of delays, in which respective delays have delay time as long as one clock pulse.

5. The motion vector high-speed decoding circuit according to claim 3 or 4, wherein said delta calculation means (22, 23) comprises:
an absolute value calculator (21) for obtaining an absolute value of the motion vector code read from said parameter store (10) and subtracting "1" from the absolute value to output the subtracted result;
a first delta calculator (22) for reading the motion vector range determination code and the motion vector residual code from said parameter store (10), subtracting "1" from the motion vector range determination code to left-shift by one bit, multiplying the left-shifted result by the output of said absolute value calculator (21), and masking a bit portion except for an effective portion of the motion vector residual code; and
a second delta calculator (23) for adding the outputs of said first delta calculator (22) and adding a carry input of "1" to the added result, to thereby calculate a delta value.

6. The motion vector high-speed decoding circuit according to claim 5, wherein each operation of said absolute value calculator (21), said first delta calculator (22), said second delta calculator (23), said delta determiner (24), said motion vector determiner (25) and said range controller (26) is performed in one clock pulse.

7. The motion vector high-speed decoding circuit according to any of the preceding claims, wherein said motion vector decoding means (20) needs six clock periods to decode one motion vector and 6+(n-1) clock periods to decode n motion vectors.

8. The motion vector high-speed decoding circuit according to claim 5 or 6, or claim 7 as dependant upon claim 5 or 6, wherein said first delta calculator (22) subtracts "1" from said motion vector range determination code to obtain the number of effective bits of said motion vector residual code and masks the remainder bit portion of said motion vector residual code as "0" except for a portion corresponding to the effective bit number.

9. The motion vector high-speed decoding circuit according to claim 5, 6 or 8, or claim 7 as dependant upon claim 5 or 6, wherein said first delta calculator (22) receives the motion vector code output from a first delay (213) of said pipeline and the motion vector range determination code output from said parameter store (10), performs a logical operation of a condition when the motion vector code is "0" or the motion vector range determination code is "1" and outputs the logical operation result as a select signal for determining a delta value of said delta determiner (24).

10. The motion vector high-speed decoding circuit according to claim 9, wherein a delay (234) for delaying the select signal output from said first delta calculator (22) for one clock pulse during which said second delta calculator (23) calculates the delta value is provided between said first delta calculator (22) and said delta determiner (24).

11. The motion vector high-speed decoding circuit according to claim 10, wherein said delta determiner (24) receives the calculated delta value output from said second delta calculator (23) and the motion vector code output from a third delay (233) of said pipeline, and determines said motion vector code as a final delta value if the select signal meeting the condition of said logic operation is input via said delay while determining said calculated delta value as a final delta value if the select signal which does not meet the condition of the logic operation.

12. The motion vector high-speed decoding circuit according to claim 11, wherein said delta determiner (24) inverts individual bits constituting the finally determined delta value in order to reverse a sign bit of the finally determined delta value if said motion vector is smaller than "0" when said calculated delta value is determined as a final delta value.

13. The motion vector high-speed decoding circuit according to claim 12, wherein the last delay (243) in said pipeline applies the sign of the motion vector as a carry input of said motion vector determiner (25).

14. The motion vector high-speed decoding circuit according to claim 13, wherein said motion vector determiner (25) comprises:
a divider (251) for outputting the stored previous motion vector as it is or dividing the same by "2" to output the divided result under the control of said motion vector controller (30);
an adder (252) for receiving the previous motion vector output from said divider (251) and the delta value determined in said delta determiner (24) to add the same, and adding the sign of the motion vector code which is a carry input to the added result, to calculate a current motion vector; and
a delay (253) for delaying the calculated motion vector and outputting the delayed result.

15. The motion vector high-speed decoding circuit according to claim 14, wherein said range controller (26) comprises:
a range control unit (261) for receiving the current motion vector calculated via said delay (253), comparing the received motion vector with the motion vector range by the motion vector range determination code read from said parameter store (10), adding the current motion vector to the motion vector range if the current motion vector is smaller than the minimum value of the motion vector range and subtracting the motion vector range from the current motion vector if the current motion vector is greater than the maximum value of the motion vector range;
a multiplier (262) for outputting the range-controlled motion vector or multiplying the range-controlled motion vector by "2" to output the multiplied result under the control of said motion vector controller (30); and
a delay (263) for delaying the output of said multiplier.

16. The motion vector high-speed decoding circuit according to claim 15, wherein said motion vector controller (30) controls said divider (251) in said motion vector determiner (25) to divide the previous motion vector by "2" when the current motion vector is a vertical component at a field structure of a frame picture from the input parameter, and then controls said multiplier (262) in said range controller (26) to multiply the range-controlled current motion vector by "2".

17. The motion vector high-speed decoding circuit according to any of the preceding claims, wherein said motion vector controller (30) selects the dual motion vector applied from said dual primer (50) when the kind of the motion vector is a predictive-picture (P-picture), and selects the previous motion vector applied from said motion vector decoding means (20) in the other cases, to thereby output a finally decoded motion vector.
